# FASCICULE DE BREVET EUROPEEN

(11) **EP 2 084 574 B1**
(45) Date de publication et mention de la délivrance du brevet: **24.09.2014**
(21) Numéro de dépôt: 07858646.8
(22) Date de dépôt: 22.10.2007
(51) Int. Cl.: G02F 1/155

(54) **COUCHE TRANSPARENTE A HAUTE CONDUCTIVITE ELECTRIQUE AVEC GRILLE METALLIQUE A TENUE ELECTROCHIMIQUE OPTIMISEE**
TRANSPARENTE SCHICHT MIT HOHER ELEKTRISCHER LEITFÄHIGKEIT MIT METALLGITTER MIT OPTIMIERTEM ELEKTROCHEMISCHEM WIDERSTAND
HIGH ELECTRIC CONDUCTIVITY TRANSPARENT LAYER WITH A METALLIC GRID HAVING AN OPTIMISED ELECTROCHEMICAL RESISTANCE

(30) Priorité: 03.11.2006 FR 0654708; 05.04.2007 FR 0754333
(43) Date de publication de la demande: 05.08.2009
(73) Titulaire: Saint-Gobain Glass France, 92400 Courbevoie (FR)
(72) Inventeur: VALENTIN, Emmanuel, F-94420 Le Plessis Trevise (FR); DUBRENAT, Samuel, F-75017 Paris (FR); JOUSSE, Didier, F-95150 Taverny (FR); GIRON, Jean-Christophe, B-4700 Eupen (BE); LETOCART, Philippe, B-4730 Raeren (BE); KIM, Se-JONG, F-60200 Compiegne (FR); STEERS, Emilie, F-75020 Paris (FR)
(74) Mandataire: Colombier, Christian
(86) Numéro de dépôt international: PCT/FR2007/052226
(87) Numéro de publication internationale: WO 2008/053109

(56) Documents cités:
- WO-A-92/18896
- WO-A-99/32929
- JP-A- 2002 082 360
- US-A1- 2002 085 157
- US-A1- 2003 048 519
- US-A1- 2006 033 978

## Description

La présente invention a pour objet une couche électroconductrice pour dispositif électrochimique, et/ou électrocommandable du type vitrage et à propriétés optiques et/ou énergétiques variables, ou un dispositif photovoltaïque, ou encore un dispositif électroluminescent. Elle vise plus particulièrement une couche transparente à haute conductivité électrique avec grille métallique à tenue électrochimique optimisée, adaptée pour subir un traitement thermique de type bombage, ou trempe.

Il y a en effet actuellement une demande accrue pour des vitrages dits "intelligents" aptes à s'adapter aux besoins des utilisateurs.

Il existe aussi une demande accrue pour les vitrages photovoltaïques, qui permettent de convertir l'énergie solaire en énergie électrique, ainsi que pour les vitrages électroluminescents qui ont des applications intéressantes dans les appareils d'affichage et en tant que surfaces éclairantes.

En ce qui concerne les vitrages "intelligents", il peut s'agir du contrôle de l'apport solaire à travers des vitrages montés en extérieur dans des bâtiments ou des véhicules du type automobile, train ou avion. Le but est de pouvoir limiter un échauffement excessif à l'intérieur des habitacles/locaux, mais uniquement en cas de fort ensoleillement.

Cela concerne aussi les miroirs utilisés comme rétroviseurs, pour éviter ponctuellement au conducteur d'être ébloui, ou les panneaux de signalisation, pour que des messages apparaissent quand cela est nécessaire, ou par intermittence pour mieux attirer l'attention. Des vitrages que l'on peut rendre à volonté diffusants peuvent être utilisés quand on le souhaite comme écrans de projection.

Il peut aussi s'agir du contrôle du degré de vision à travers des vitrages, notamment afin de les obscurcir, de les rendre diffusant voire d'empêcher toute vision quand cela est souhaitable. Cela peut concerner les vitrages montés en cloisons intérieures dans les locaux, les trains, les avions ou montés en vitres latérales d'automobile, ou plus particulièrement encore, lorsque ces vitrages sont montés en façade d'un écran plat de type par exemple LCD, ou à plasma. Dans cette utilisation spécifique des écrans plats, l'élément de façade, généralement un substrat en verre, joue un rôle prépondérant dans l'esthétisme de l'écran.

En effet, il est nécessaire qu'à l'état éteint, ces écrans présentent une façade noire et qu'à l'état allumé, cette façade noire disparaisse le plus rapidement possible pour révéler l'image.

A l'heure actuelle, les fabricants d'écran de ce type montent en façade un substrat présentant une transmission lumineuse T₁ de l'ordre de 50 %. Or, on comprend aisément qu'à l'état allumé, cet abaissement de T₁ demeure et nuit à la qualité de l'image.

Les inventeurs ont eu l'idée de proposer de substituer à cette façade à T_{L} abaissée un substrat transparent muni d'un système électrocommandable permettant ce genre de modifications d'aspect esthétique.

Pour moduler la transmission lumineuse ou l'absorption lumineuse des vitrages, il y a les systèmes dits viologènes, comme ceux décrits dans les brevets US-5 239 406 et EP-612 826.

Pour moduler la transmission lumineuse et/ou la transmission thermique des vitrages, il y a aussi les systèmes dits électrochromes. Ceux-ci, de manière connue, comportent généralement deux couches de matériau électrochrome séparées par une couche d'électrolyte et encadrées par deux couches électroconductrices. Chacune des couches de matériau électrochrome peut insérer réversiblement des cations et des électrons, la modification de leur degré d'oxydation suite à ces insertions/désinsertions conduisant à une modification dans ses propriétés optiques et/ou thermiques. On peut notamment moduler leur absorption et/ou leur réflexion dans les longueurs d'onde du visible et/ou de l'infra-rouge.

Il est d'usage de ranger les systèmes électrochromes en trois catégories :
- celle où l'électrolyte est sous forme d'un polymère ou d'un gel ; par exemple un polymère à conduction protonique comme ceux décrits dans les brevets EP-253 713 ou EP-670 346, ou un polymère à conduction d'ions lithium comme ceux décrits dans les brevets EP-382 623, EP-518 754 et EP-532 408 ; les autres couches du système étant généralement de nature minérale,
- celle où l'électrolyte est, comme l'ensemble des autres couches constituant le système, une couche essentiellement minérale. On désigne souvent cette catégorie sous le terme de système "tout solide ", on pourra en trouver des exemples dans les brevet EP-867 752, EP-831 360, les brevets WO.00/57243 et WO.00/71777,
- celle où l'ensemble des couches est à base de polymères, catégorie que l'on désigne souvent sous le terme de système "tout polymère".

Il existe aussi des systèmes appelés "valves optiques". Il s'agit de films comprenant une matrice de polymère généralement réticulé dans laquelle sont dispersées des micro-gouttelettes contenant des particules qui sont capables de se placer selon une direction privilégiée sous l'action d'un champ magnétique ou électrique. Il est ainsi connu du brevet WO93/09460 une valve optique comprenant une matrice en polyorganosilane et des particules du type polyiodure qui interceptent beaucoup moins la lumière quand le film est mis sous tension.

On peut aussi citer les systèmes dits à cristaux liquides, d'un mode de fonctionnement similaire aux précédents. Ils sont basés sur l'utilisation d'un film placé entre deux couches conductrices et à base d'un polymère dans lequel sont disposées des gouttelettes de cristaux liquides, notamment nématiques à anisotropie diélectrique positive. Les cristaux liquides, quand le film est mis sous tension, s'orientent selon un axe privilégié, ce qui autorise la vision. Hors tension, en l'absence d'alignement des cristaux, le film devient diffusant et empêche la vision. Des exemples de tels films sont décrits notamment dans les brevets européen EP-0 238 164, et américains US-4 435 047, US-4 806 922, US-4 732 456. Ce type de film, une fois feuilleté et incorporé entre deux substrats en verre, est commercialisé par la société Saint-Gobain Vitrage sous la dénomination commerciale "Priva-Lite".

On peut en fait utiliser tous les dispositifs à cristaux liquides connus sous les termes de " NCAP " (Nematic Curvilinearly Aligned Phases) ou " PDLC " (Polymer Dispersed Liquid Cristal).

On peut également utiliser, par exemple, les polymères à cristaux liquides cholestériques, comme ceux décrits dans le brevet WO92/19695.

Quant aux systèmes électroluminescents, ils comportent un matériau ou un empilement de matériaux électroluminescents, organiques ou inorganiques alimenté en électricité par des électrodes.

Tous ces systèmes confondus ont en commun la nécessité d'être équipés en amenées de courant venant alimenter des électrodes généralement sous forme de deux couches électroconductrices de par et d'autre de la couche ou des différentes couches active(s) du système.

Ces couches électroconductrices (qui peuvent en fait être une superposition de couches) comportent communément une couche à base d'oxyde d'indium, généralement l'oxyde d'indium dopé à l'étain plus connu sous l'abréviation ITO. Il peut aussi s'agir de couches à base d'oxyde d'étain dopé, par exemple à l'antimoine, ou encore à base d'oxyde de zinc dopé, par exemple à l'aluminium (ou d'un mélange à base d'au moins deux de ces oxydes). Les couches ITO ont été particulièrement étudiées. Elles peuvent être aisément déposées par pulvérisation cathodique assistée par champ magnétique, soit à partir d'une cible d'oxyde (pulvérisation non réactive), soit à partir d'une cible à base d'indium et d'étain (pulvérisation réactive en présence d'un agent oxydant du type oxygène). Cependant, pour présenter une conductivité électrique suffisante pour l'application et pour être électrochimiquement robustes, elles nécessitent le recours à une étape de traitement thermique in situ ou en reprise (souvent au delà de 300°C).

Néanmoins, bien que fonctionnellement bien adaptée en tant que couche électroconductrice au sein d'un système électrocommandable, l'ITO, même recuit, présente une conductivité insuffisante, induisant un phénomène de perte de charge pendant les changements d'états du système (passage d'un état coloré à un état décoloré). Ceci se traduit dans le cas spécifique d'un système électrocommandable de type électrochrome par une commutation inhomogène et une vitesse de commutation ralentie de façon linéaire en fonction de la surface du système. On comprend que si on utilise une couche électroconductrice à base d'ITO dans un système électrochrome associé à un substrat à fonction verrière en tant qu'élément façade pour écran plat, les spécifications techniques de l'ITO sont incompatibles avec ce type d'utilisation (par exemple vitesse de commutation entre l'état arrêt et l'état marche de l'écran).

Une autre approche consiste à insérer, dans un empilement de couches d'oxyde, une couche métallique permettant d'améliorer la résistance surfacique de la couche électroconductrice Cette couche métallique étant par ailleurs suffisamment fine pour conserver un certain niveau de transmission lumineuse

Dans ce cadre, on connaît par exemple par le document WO93/05438 une couche électroconductrice constituée d'une fine couche métallique notamment à base d'argent, de cuivre, d'aluminium qui est associée à une couche à base d'un bloqueur métallique comme par exemple le fer, le zirconium, le titane, le tungstène. Cet empilement de type TCO : abréviation anglaise pour « Oxyde Transparent Conducteur » est destiné à être intégré dans un dispositif électrochimique de type électrochrome au sein duquel la couche de bloqueur métallique constitue une barrière à la diffusion des ions Li+ entre l'une des couches actives et la couche métallique.

On connaît par ailleurs par le document WO94/15247 une couche électroconductrice de structure similaire à celle précédemment décrite, qui est complétée par une couche à base d'oxyde conducteur transparent comme par exemple l'oxyde de zinc, ou l'oxyde d'indium dopé à l'étain.

Le document US2006/0033978 décrit une couche électrochimique à propriétés optiques variables comprenant une grille métallique et une couche de protection électrochimique.

On connaît en outre par les documents US5510173 et US5763063, une structure d'empilement à contrôle énergétique incorporant une couche d'argent ou de cuivre avantageusement alliée avec un métal noble, pour lesquelles une protection à l'égard de la corrosion est obtenue par le revêtement d'un bicouche à base d'oxyde ou d'un mélange d'oxyde, par exemple de l'In₂O₃ et d'ITO ou ZnO₂/In₂O₃ et ITO. Dans le cas de l'utilisation du ZnO₂, l'application en tant électrode est impossible du fait du caractère isolant de cet oxyde.

Par ailleurs, on connaît par le brevet US6870656 qui décrit une structure d'électrode réfléchissante incorporant une couche à base d'alliage d'argent et d'or électrochimiquement stable.

Quelle que soit la structure de couche électroconductrice décrite précédemment, sa tenue électrochimique n'est obtenue que lorsque cette couche électroconductrice est alliée.

Une autre stratégie pour améliorer la tenue électrochimique de la couche métallique consisté à protéger celle-ci par l'association de deux oxydes ZnO :A1 et ITO (on pourra se reporter à la demande de brevet FR 2886419).

Cependant, quelque soit la structure du TCO, il est difficile d'avoir une résistance surfacique très basse et une vitesse de commutation rapide pour les systèmes actifs sans utiliser une couche métallique épaisse dégradant notablement la transmission lumineuse.

Une solution permettant d'améliorer la vitesse de commutation a été décrite dans le brevet US5293546 par l'emploi d'une grille métallique revêtue d'un oxyde du type ITO. Cependant, dans une application dans le domaine des électrochromes, la résistance électrochimique de la grille est notoirement insuffisante.

Le but que se fixe l'invention est de parvenir à obtenir un assemblage de couches électroconductrices électrochimiquement robuste et permettant des temps de commutation rapide pour constituer les électrodes des systèmes électrochimiques/électrocommandables du type de ceux précédemment décrits (électrochromes, photovoltaïques ...). Accessoirement, il s'agit d'atteindre cet objectif à moindre coût et en s'affranchissant des étapes de traitement thermique et sans bouleverser les configurations connues des systèmes électrochimiques concernant l'invention. Il s'agit, plus généralement, de mettre au point des électrodes sur substrat essentiellement transparent (verre ou matériau polymère), qui soient meilleures.

L'invention a pour objet la couche electroconductrice de la revendication 1.

Grâce à cette structure de grille particulière, il est possible d'obtenir, à moindre coût, une électrode présentant une tenue électrochimique compatible avec les systèmes électrocommandables tout en ayant des propriétés de conductivité électrique élevée garantissant ainsi des temps de commutation extrêmement rapide entre un état coloré et un état décoloré du système électrocommandable.

Dans des modes de réalisation préférés de l'invention, on peut éventuellement avoir recours en outre à l'une et/ou à l'autre des dispositions suivantes :
- la couche de protection électrochimique est associée à au moins une couche barrière à base d'oxyde métallique,
- la grille est à base d'un matériau pur choisi parmi l'argent, le cuivre, le zinc, l'aluminium, le nickel, le chrome, un alliage de nickel et de chrome.
- L'épaisseur de la couche de protection électrochimique est comprise entre 10 à 100 nm, et de manière plus préférentielle comprise entre 25 à 75 nm, et de manière encore plus préférentielle voisine de 50 nm,
- l'épaisseur de la couche barrière est comprise entre 40 et 400 nm, et de manière plus préférentielle comprise entre 60 et 300 nm, et de manière encore plus préférentielle voisine de 250 nm.
- La grille est déposée sur une seconde couche barrière, notamment à base de nitrure de silicium
- La résistivité de la couche électroconductrice est comprise entre 0.01 Ohm/carré et 1 Ohm/carré, de manière préférentielle comprise entre 0.2 et 0.6 Ohm/carré, et de manière encore plus préférentielle voisine de 0.4 Ohm/carré,
- La couche électroconductrice est adaptée pour subir un traitement thermique de type bombage, ou trempe

On entend au sens de l'invention par électrode " inférieure ", l'électrode qui se trouve la plus proche du substrat porteur pris en référence, sur laquelle une partie au moins des couches actives (par exemple l'ensemble des couches actives dans un système électrochrome " tout solide ") est déposée. L'électrode " supérieure " surmonte l'empilement de couches actives, par rapport au même substrat de référence.

Avantageusement, l'électrode inférieure incorporant la couche électroconductrice selon l'invention présente une résistivité électrique comprise entre 0.2 et 0.6 Ohm/carré et une TL de 75 à 85 %, ce qui rend son utilisation en tant qu'électrode transparente parfaitement satisfaisante

De préférence, notamment pour atteindre ce niveau de résistivité, la grille métallique a une épaisseur totale comprise entre 1 et 3 µm,

Dans ces gammes d'épaisseurs, l'électrode demeure transparente, c'est-à-dire qu'elle présente une faible absorption lumineuse dans le visible même en présence de la grille (son réseau est quasiment invisible compte tenu de ses dimensions). La grille présente une structure périodique ou apériodique représentant une occultation de 15 à 25 % de la lumière. Par exemple un réseau carré présentant des brins métalliques de 20 µm de large espacés de 300 µm confère à un substrat nu de transmission lumineuse 92% une transmission lumineuse de 80%. Des exemples de réalisation de ces structures périodique ou apériodique sont décrites dans la demande allemande DE 10 2006 045 514.2

Comme mentionné plus haut, l'invention peut s'appliquer à différents types de systèmes électrochimiques ou électrocommandables. Elle s'intéresse plus particulièrement aux systèmes électrochromes, notamment les " tout solide " (les « tout solide » étant définis, au sens de l'invention pour des empilements de couches pour lesquels toutes les couches sont de nature inorganique) ou les " tout polymère "(les « tout polymère » étant définis, au sens de l'invention pour des empilements de couches pour lesquels toutes les couches sont de nature organique), ou encore pour des électrochromes mixtes ou hydrides (les couches de l'empilement sont de nature organique et de nature inorganique) ou encore aux systèmes à cristaux liquides ou viologènes, ou encore aux systèmes électroluminescents..

Les systèmes, ou vitrages, électrochromes auxquels peut s'appliquer l'invention, sont décrits dans les brevets précités. Ils peuvent comporter au moins un substrat porteur et un empilement de couches fonctionnelles comprenant au moins successivement une première couche électroconductrice telle que précédemment décrite, une couche électrochimiquement active susceptible d'insérer réversiblement des ions tels que H⁺, Li⁺, OH- du type matériau électrochrome anodique ou respectivement cathodique, une couche d'électrolyte, une seconde couche électrochimiquement active susceptible d'insérer réversiblement des ions tels que H⁺, Li⁺, OH⁻ du type matériau électrochrome cathodique ou respectivement anodique, et une seconde couche électroconductrice, (le terme de " couche " est à comprendre comme une couche unique ou une superposition de plusieurs couches, continues ou discontinues).

L'invention concerne également l'incorporation des dispositifs électrochimiques décrits dans le préambule de la présente demande dans des vitrages, fonctionnant en transmission. Le terme " vitrage " est à comprendre au sens large et englobe tout matériau essentiellement transparent, en verre et/ou en matériau polymère (comme du polycarbonate PC ou du polymétacrylate de méthyle PMMA). Les substrats porteurs et/ou contre-substrats, c'est-à-dire les substrats encadrant le système actif, peuvent être rigides, flexibles ou semi-flexibles.

L'invention concerne également les diverses applications que l'on peut trouver à ces dispositifs, vitrages ou miroirs : il peut s'agir de faire des vitrages pour bâtiment, notamment des vitrages extérieurs, des cloisons internes ou des portes vitrées). Il peut aussi s'agir de fenêtres, toits ou cloisons internes de moyens de transport comme des trains, avions, voitures, bateaux, engin de chantier,. Il peut aussi s'agir d'écrans de visualisation ou d'affichage, comme des écrans de projection, des écrans de télévision ou d'ordinateur, des écrans tactiles. On peut aussi les utiliser pour faire des lunettes ou des objectifs d'appareil photo, ou encore pour protéger des panneaux solaires. On peut aussi les utiliser comme dispositifs de stockage d'énergie du type batterie, pile à combustible, batteries et piles elles-mêmes.

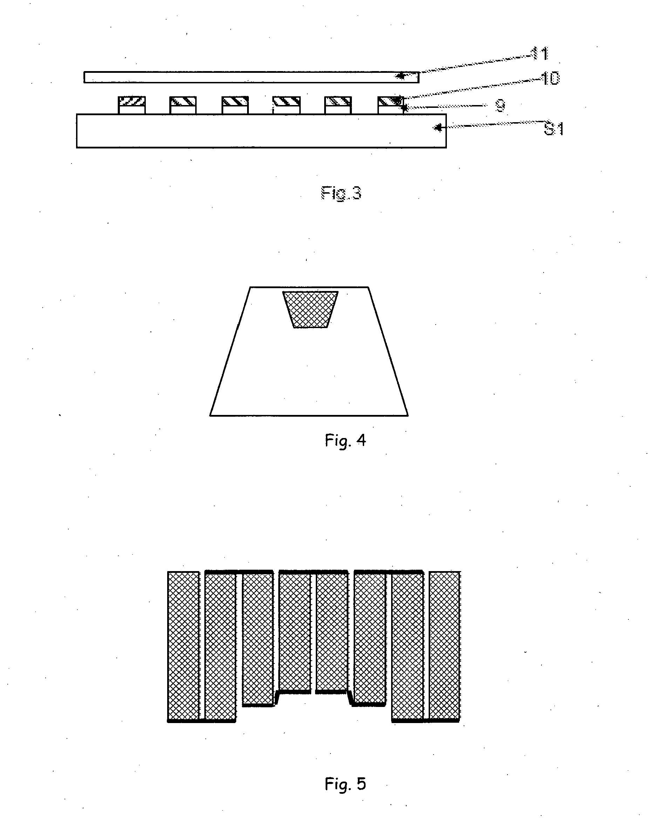

L'invention sera maintenant décrite plus en détails à l'aide d'exemples non limitatifs et de figures :

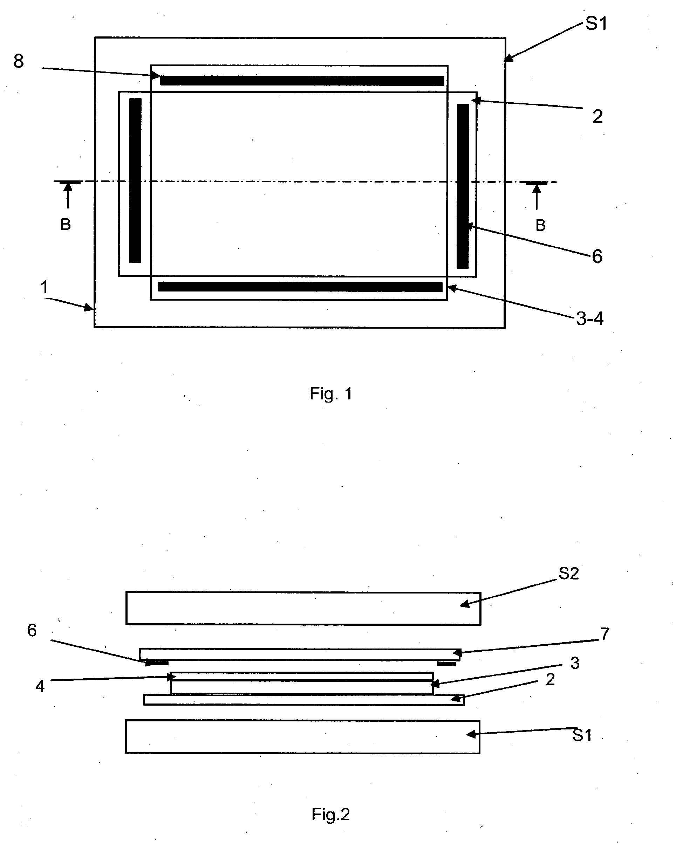

- La figure 1 : une vue schématique de dessus d'une cellule électrochrome utilisant une couche électroconductrice conforme à l'invention,
- la figure 2 est une vue en coupe de l'ensemble de l'empilement incluant une couche électroconductrice conforme à l'invention.
- La figure 3 est une en coupe, à grande échelle, de la couche électroconductrice conforme à l'invention.
- La figure 4 est une vue schématique d'une variante de réalisation de l'invention.
- La figure 5 illustre un mode de montage électrique particulier de l'invention
- La figure 6 est une vue schématique d'une grille étirée, déformée. Les figures 1 et 2 sont volontairement très schématiques et ne sont pas nécessairement à l'échelle pour en faciliter la lecture : elles représentent un dispositif électrochrome " tout solide " selon les enseignements de l'invention comprenant successivement:
- un substrat de verre silico-sodo-calcique S1 clair de 2,1 mm d'épaisseur,
- une électrode inférieure 2 comportant d'une part une grille 9 (visible en figure 3) réalisée en aluminium se présentant sous la forme d'un réseau carré avec des brins de 20 µm de large espacés de 300 µ et d'épaisseur de l'ordre de 3 µm, cette grille 9 étant revêtue d'une couche de protection électrochimique 10 (visible en figure 3) à base de nitrure de titane selon une épaisseur voisine de 50 nm, associée à au moins une couche barrière 11 (visible en figure 3) comportant un empilement de couches du type /ZnO :A1/ITO d'épaisseurs respectives 60 nm pour le ZnO :A1/30 nm pour l'ITO,
- une électrode supérieure 4 à base d'ITO ou de SnO₂ :F
- un système électrochrome 3 dont la structure est décrite ci après
- une feuille 7 de PU permet de feuilleter le verre S1 à un autre verre S2 de mêmes caractéristiques que le verre S1. Optionnellement, la face du verre S2 tournée vers la feuille de PU 7 est munie d'un empilement de couches minces à fonction de protection solaire. Cet empilement peut notamment comporter deux couches d'argent intercalées par des couches en diélectrique, de façon connue. En variante, la feuille de PU 7 peut être munie, au niveau de sa face en contact avec l'empilement actif 3, d'une grille 9 similaire à celle déposée sur le substrat, en tant qu'électrode inférieure 2. Les électrodes 2 et 4 sont reliées à des amenées de courant 6 et 8.

Le système électrochrome 3 comprend :
- une première couche de matériau électrochrome anodique EC1 en oxyde d'iridium (hydraté) de 40 à 100 nm ou d'oxyde de nickel hydraté de 40 à 400 nm, alliée ou non à d'autres métaux, (en variante, cette couche peut être remplacée par une couche de matériau électrochrome anodique en oxyde de nickel de 100 à 300 nm, alliée ou non à d'autres métaux)
- une couche en oxyde de tungstène de 100 nm,
- une seconde couche en oxyde de tantale hydraté ou d'oxyde de silice hydraté ou d'oxyde de zirconium hydraté de 100 nm, ces deux dernières couches formant une couche à fonction électrolyte EL
- une seconde couche de matériau électrochrome EC2 cathodique à base d'oxyde de tungstène WO₃ de 370 nm,

L'ensemble des couches a été déposé par pulvérisation cathodique assistée par champ magnétique.

Le dispositif électrochrome décrit précédemment constitue l'exemple 1.

On donne ci-après l'exemple 2 qui est une structure connue de l'art antérieur et pour laquelle les électrodes tant inférieure que supérieure sont à base d'ITO ou de SnO₂ :F

### EXEMPLE 2 (comparatif = standard EC)

le vitrage électrochrome EC est de composition identique à l'exemple 1 à ceci près que
- l'électrode inférieure 2 est à base d'ITO (oxyde d'indium dopé à l'étain) de 500 nm, déposé à chaud (350°C), et n'incorpore pas de grille.

En variante, l'électrode supérieure comporte d'autres éléments conducteurs: il peut s'agir plus particulièrement d'associer l'électrode à une couche plus conductrice qu'elle, et/ou à une pluralité de bandes ou de fils conducteurs. On se reportera pour plus de détails au brevet WO-00/57243 précité pour la mise en oeuvre de telles électrodes multi-composantes. Un mode de réalisation préféré de ce type d'électrode consiste à appliquer sur la couche d'ITO (éventuellement surmontée d'une ou plusieurs autres couches conductrices) un réseau de fils conducteurs incrustés à la surface d'une feuille de polymère (qui pourra alors protéger le système actif et/ou permettre le feuilletage du substrat-porteur du type verre avec un autre verre dans le cas d'une fabrication de vitrage électroactif, du type électrochrome par exemple).

La grille 9 en aluminium peut être obtenue par exemple par une technique de photolithographie, ou par une technique d'ablation laser et on donne ci-après dans le tableau 1 ci-dessous les valeurs de TL (transmission lumineuse) et de conduction électrique obtenues.

| | **Epaisseur A1 (µm)** | **TL (%)** | **Rc (Ω/carré)** |
|---|---|---|---|
| **Grille laser** | 1 | 75- 77 | 0.8 - 0.9 |
| **Grille laser** | 3 | 76 - 78 | 0.4 - 0.6 |
| **Grille litho** | 1 | 68 - 70 | 0.7 - 0.8 |
| **Grille litho** | 3 | 67 - 71 | 0.3 - 0.4 |

Des tests comparatifs ont été effectués sur les deux cellules électrochromes de dimensions 30 cm x 30 cm et sont résumés dans le tableau 2 ci-dessous :

**Tableau 2 : Mesures des vitesses de commutation**

| | **Exemple 2** | | **Exemple 1** | |
|---|---|---|---|---|
| | **Zone A** | **Zone B** | **Zone A** | **Zone B** |
| **TLdec (%)** | 63,5 | 64,8 | 70 | 69,9 |
| **TLcol (%)** | 22,3 | 17,45 | 26 | 24 |
| **Contraste** | 2,85 | 3,71 | 2,69 | 2,91 |
| **Vcolo (s)** | 13 | 9 | 3 | 3 |
| **Vdeco (s)** | 8 | 5 | 3 | 3 |

| | | | | |
|---|---|---|---|---|
| Zone A : centre Zone B : côté TLdec : Transmission lumineuse à l'état décoloré TLcol : Transmission lumineuse à l'état coloré V colo : temps pour atteindre 90 % de coloration à partir de l'état décoloré Vdeco : temps pour atteindre 90 % de décoloration à partir de l'état coloré | | | | |

A contraste constant (environ 3), le vitrage EC de l'exemple 1 (sur électrode à grille métallique) est caractérisé, par rapport au vitrage EC de l'exemple 2 par:
- une commutation plus rapide (gain d'un facteur 3 à 4 en temps de coloration et 1.6 à 2.6 en décoloration)
- une commutation homogène (temps de commutation identiques sur toute la surface).

| | Résistivité(Ω/carré) | V com (s) | Contraste |
|---|---|---|---|
| Exemple 2 (std EC) | 5 | 13 | 3 |
| Exemple 1 | 0.5 | 3 | 3 |

Selon une autre caractéristique avantageuse de l'invention, on montre que la grille objet de l'invention est apte à subir des traitements thermiques, en particulier elle résiste à un bombage, voire à une trempe.

Après avoir déposé sur un substrat à fonction verrière, par exemple par un procédé de pulvérisation magnétron, une couche d'aluminium d'environ 3 µm, cette couche étant revêtue par une couche de protection électrochimique à base de nitrure de titane d'environ 20 nm, par exemple déposée également par voie de pulvérisation magnétron. En variante, une couche barrière à base nitrure de silicium est interposée entre le substrat à fonction verrière et la couche métallique à base d'aluminium.

Cet empilement est ensuite gravé par des techniques de lithographies, ou d'ablation laser.

La grille ainsi formée sur un premier substrat est associée avec un second substrat formant contre verre et de manière à se situer soit en face 2, soit en face 3 de l'assemblage constitué par la superposition des deux substrats. Le bombage des 2 feuilles superposées est effectué par tout procédé adapté, notamment par gravité sur des supports tels que des squelettes, des cadres, par pressage et/ou par aspiration sur des cadres ou des formes pleines.

Dans le cas d'une trempe, la grille ainsi formée est associée à un substrat qui est trempé par tout procédé classique de trempage.

La nature de l'empilement à partir duquel a été réalisé la grille est particulièrement adaptée pour résister à l'oxydation (l'aluminium se passivant), le nitrure de titane formant barrière à l'oxydation, la grille étant également protégée de l'oxygène par le feuilletage.

Les mesures de résistivité données ci-après illustrent parfaitement que la grille conserve ses propriétés de conductivité électrique avant et après bombage ou après trempe.

Ainsi par exemple une grille de 3 µm d'épaisseur, ayant une largeur de brin de 40 µm et un espace d'inter brin de 300 µm présente une résistivité de carré de 0,3 Ω/carré avant traitement thermique et une résistivité de 0,25 Ω/carré après bombage ou trempe.

L'invention concerne aussi le substrat muni d'au moins une électrode du type décrit plus haut, indépendamment du dispositif électrique/électrochimique dans lequel elle est incorporée ou destinée à être incorporée ainsi que l'électrode en tant que telle.

Selon d'autres applications possibles de ladite grille cette dernière peut être utilisée en tant que couche active dans un dispositif électrochimique, et/ou électrocommandable et à propriétés optiques et/ou énergétiques variables, ou un dispositif photovoltaïque, ou encore un dispositif électroluminescent, ou bien encore un dispositif chauffant, ou éventuellement un dispositif à lampe plane, un dispositif de blindage électromagnétique, ou tout autre dispositif nécessitant une couche transparente conductrice.

En tant que dispositif chauffant, cette grille peut être positionnée au sein d'une ouverture réalisée dans le pare-brise au travers de laquelle un objectif de caméra ou de tout autre type d'appareil électronique pointe, cette ouverture étant constamment dépourvue de buée du fait du dispositif chauffant (cf figure 4).

Selon une autre variante de réalisation, la grille peut être déformée, étirée sur son support de manière à présenter localement des propriétés électriques (conductivité) différentes de la zone limitrophe.

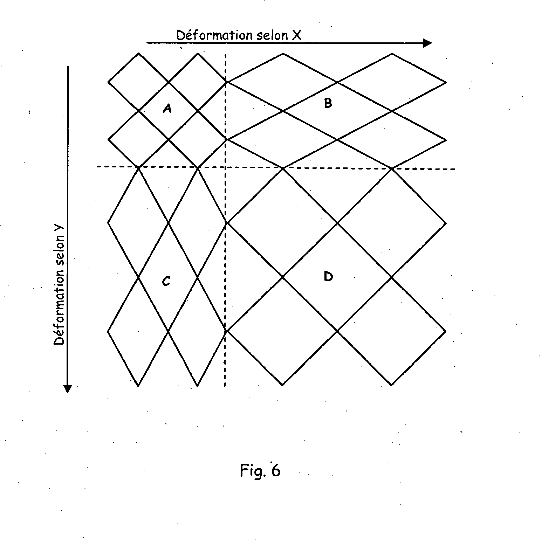

En fonction de la direction privilégiée de la déformation dans un sens de l'étirement (deux mailles contigües sont écartées entre elles) ou de la rétractation (au contraire deux mailles contiguës sont rapprochées), il est possible d'induire lors du passage du courant dans la grille des fronts de chauffe selon des directions privilégiées. On peut ainsi en fonction du profil du vitrage (plan, bombé, complexe...) obtenir soit un chauffage homogène et compenser les facteurs de forme, soit au contraire des zones de chauffe distincte en fonction de zones particulières du vitrage par exemple favoriser le chauffage sur les bords plutôt qu'au centre (cf figure 6).

On peut aussi sans sortir du cadre de l'invention utilise plusieurs grilles présentant chacune leur propre caractéristique (résistivité par exemple) en les associant électriquement à l'aide de bus bar soit en série, soit en parallèle (on pourras se reporter à la figure 5).

## Revendications

1. Dispositif électrochimique/ électrocommandable, à propriétés optiques et/ou énergétiques variables comportant au moins un substrat (SI) porteur muni d'une couche électroactive ou d'un empilement (3) de couches électroactives disposé(e) entre une électrode dite " inférieure " (2) et une électrode dite " supérieure " (4), l'une au moins des électrodes inférieure (2) ou supérieure (4) comprenant au moins une couche électroconductrice composée d'une grille (9) métallique constituée d'un métal pur, **caractérisé en ce que** l'épaisseur de la grille (9) est comprise entre 1 à 15 µm, et de manière plus préférentielle comprise entre 2 à 8 µm, et de manière encore plus préférentielle voisine de 3 µm, **en ce que** la couche électroconductrice est revêtue d'au moins une couche de protection électrochimique (10)à base d'un matériau choisi parmi le titane, l'or, le platine, le palladium, ledit matériau étant éventuellement nitruré et **en ce que** la couche de protection électrochimique (10) est associée à au moins une couche barrière (11) à base d'oxyde métallique choisi parmi l'oxyde de zinc, l'oxyde mixte de zinc dopé par un autre métal choisi parmi la famille des métaux suivants : Al , Ga, B, Sc, l'oxyde d'indium dopé, notamment à l'étain, l'oxyde d'étain dopé, notamment à l'antimoine.

2. Dispositif selon la revendication 1, **caractérisée en ce que** la grille (9) est à base d'un matériau pur choisi parmi l'argent, le cuivre, le zinc, l'aluminium, le nickel, le chrome, un alliage de nickel et de chrome.

3. Dispositif selon l'une quelconque des revendications précédentes, **caractérisée en ce que** la grille (9) présente une structure périodique ou apériodique représentant une occultation de 15 à 25 % de la lumière.

4. Dispositif selon l'une quelconque des revendications précédentes, **caractérisée en ce que** l'épaisseur de la couche de protection électrochimique (10) est comprise entre 10 à 100 nm, et de manière plus préférentielle comprise entre 25 à 75 nm, et de manière encore plus préférentielle voisine de 50 nm.

5. Dispositif selon l'une quelconque des revendications précédentes, **caractérisée en ce que** l'épaisseur de la couche barrière (11) est comprise entre 40 et 400 nm, et de manière plus préférentielle comprise entre 60 et 300 nm, et de manière encore plus préférentielle voisine de 250 nm.

6. Dispositif selon l'une quelconque des revendications précédentes, **caractérisée en ce que** la grille (9) est déposée sur une seconde couche barrière, notamment à base de nitrure de silicium.

7. Dispositif selon l'une quelconque des revendications précédentes, **caractérisée en ce que** la résistivité de la couche électroconductrice (2) est comprise entre 0.01 Ohm/carré et 1 Ohm/carré, de manière préférentielle comprise entre 0.2 et 0.6 Ohm/carré, et de manière encore plus préférentielle voisine de 0.4 Ohm/carré.

8. Dispositif selon l'une quelconque des revendications précédentes, **caractérisée en ce qu'**elle la grille conserve ses propriétés de conductivité électrique avant et après traitement thermique.

9. Dispositif selon la revendication précédente, **caractérisé en ce qu'**il s'agit d'un système électrochrome, notamment un système électrochrome " tout solide " ou un système électrochrome " tout solide " ou " tout polymère ", d'un système à cristaux liquides ou d'un système viologène, ou d'un système électroluminescent.

10. Vitrage **caractérisé en ce qu'**il incorpore le dispositif selon l'une des revendications précédentes

11. Utilisation du dispositif selon l'une des revendications 1 à 9 ou du vitrage selon la revendication 10 pour faire des vitrages pour bâtiment, des vitrages équipant des cloisons internes ou fenêtres ou toits ou équipant des moyens de transport du type avion, train, voiture, bateau, engin de chantier, des écrans de visualisation/d'affichage comme des écrans d'ordinateur ou de télévision ou des écrans de projection, des écrans tactiles, pour faire des lunettes ou des objectifs d'appareils photographiques ou des protections de panneaux solaires, ou des surfaces éclairantes.

## Patentansprüche

1. Elektrochemische / elektrisch steuerbare Vorrichtung mit veränderlichen optischen und/oder energetischen Eigenschaften, umfassend wenigstens ein Trägersubstrat (S1), das mit einer elektroaktiven Schicht oder mit einem Stapel (3) von elektroaktiven Schichten, die/der zwischen einer sogenannten "unteren" Elektrode (2) und einer sogenannten "oberen" Elektrode (4) angeordnet ist, versehen ist, wobei wenigstens eine der unteren (2) oder oberen (4) Elektroden wenigstens eine elektrisch leitende Schicht umfasst, die von einem aus einem reinen Metall bestehenden Metallgitter (9) gebildet ist, **dadurch gekennzeichnet, dass** die Dicke des Gitters (9) im Bereich zwischen 1 und 15 µm und bevorzugter zwischen 2 und 8 µm liegt und noch bevorzugter nahe 3 µm beträgt, dass die elektrisch leitende Schicht mit wenigstens einer elektrochemischen Schutzschicht (10) auf der Basis eines Materials, das aus Titan, Gold, Platin, Palladium ausgewählt ist, überzogen ist, wobei das Material eventuell nitriert ist, und dass die elektrochemische Schutzschicht (10) wenigstens einer Sperrschicht (11) auf der Basis von Metalloxid zugeordnet ist, das aus Zinkoxid, Mischoxid aus Zink, das mit einem weiteren Metall, ausgewählt aus der Familie der folgenden Metalle: Al, Ga, B, Sc, dotiert ist, dotiertem Indiumoxid, insbesondere mit Zinn dotiertem, dotiertem Zinnoxid, insbesondere mit Antimon dotiertem, ausgewählt ist.

2. Vorrichtung nach Anspruch 1, **dadurch gekennzeichnet, dass** das Gitter (9) auf der Basis eines reinen Materials besteht, das aus Silber, Kupfer, Zink, Aluminium, Nickel, Chrom, einer Nickel-Chrom-Legierung ausgewählt ist.

3. Vorrichtung nach einem der vorhergehenden Ansprüche, **dadurch gekennzeichnet, dass** das Gitter (9) eine periodische oder aperiodische Struktur aufweist, die eine Abdeckung von 15 bis 25 % des Lichtes ausmacht.

4. Vorrichtung nach einem der vorhergehenden Ansprüche, **dadurch gekennzeichnet, dass** die Dicke der elektrochemischen Schutzschicht (10) im Bereich zwischen 10 und 100 nm und bevorzugter zwischen 25 und 75 nm liegt und noch bevorzugter nahe 50 nm beträgt.

5. Vorrichtung nach einem der vorhergehenden Ansprüche, **dadurch gekennzeichnet, dass** die Dicke der Sperrschicht (11) im Bereich zwischen 40 und 400 nm und bevorzugter zwischen 60 und 300 nm liegt und noch bevorzugter nahe 250 nm beträgt.

6. Vorrichtung nach einem der vorhergehenden Ansprüche, **dadurch gekennzeichnet, dass** das Gitter (9) auf eine zweite Sperrschicht, insbesondere auf der Basis von Siliziumnitrid aufgebracht ist.

7. Vorrichtung nach einem der vorhergehenden Ansprüche, **dadurch gekennzeichnet, dass** der spezifische Widerstand der elektrisch leitenden Schicht (2) im Bereich zwischen 0.01 Ohm/Quadrat und 1 Ohm/Quadrat, bevorzugt zwischen 0.2 und 0.6 Ohm/Quadrat liegt und noch bevorzugter nahe 0.4 Ohm/Quadrat beträgt.

8. Vorrichtung nach einem der vorhergehenden Ansprüche, **dadurch gekennzeichnet, dass** das Gitter seine Eigenschaften elektrischer Leitfähigkeit vor und nach Wärmebehandlung bewahrt.

9. Vorrichtung nach dem vorhergehenden Anspruch, **dadurch gekennzeichnet, dass** es sich um ein elektrochromes System, insbesondere ein elektrochromes "vollständig festes" System oder ein elektrochromes "vollständig festes" oder "vollständig polymeres" System, um ein Flüssigkristall-System oder um ein Viologen-System oder um ein Elektrolumineszenz-System handelt.

10. Verglasung, **dadurch gekennzeichnet, dass** sie die Vorrichtung nach einem der vorhergehenden Ansprüche einschließt.

11. Verwendung der Vorrichtung nach einem der Ansprüche 1 bis 9 oder der Verglasung nach Anspruch 10 zur Herstellung von Verglasungen für Gebäude, Verglasungen zur Ausstattung von Innentrennwänden oder Fenstern oder Dächern oder zur Ausstattung von Verkehrsmitteln vom Typ Flugzeug, Zug, Auto, Schiff, Baustellenfahrzeug, Bild- und Anzeigeschirme, wie Computer- oder Fernsehbildschirme oder Projektionsschirme, Touchscreens, zur Herstellung von Brillen oder von Objektiven für Fotoapparate oder von Schutzvorrichtungen für Solarpaneele oder von Leuchtflächen.

## Claims

1. Electrochemical/electrically controllable device having variable optical and/or energy properties comprising at least one carrier substrate (S1) provided with an electroactive layer or with a stack (3) of electroactive layers between what is called a "lower" electrode (2) and what is called an "upper" electrode (4), at least one of the lower (2) and upper (4) electrodes including at least one electroconductive layer composed of a metal grid (9) consisting of a pure metal **characterized in that** the thickness of the grid (9) is between 1 and 15 µm, more preferably between 2 and 8 µm and even more preferably about 3 µm, **in that** the electroconductive layer is coated with at least one electrochemical protection layer (10) based on a material chosen from titanium, gold, platinum and palladium, said material optionally being nitrided and **in that** the electrochemical protection layer (10) is combined with at least one barrier layer (11) based on a metal oxide chosen from zinc oxide, mixed zinc oxide doped with another metal chosen from the family of the following metals: Al, Ga, B, and Sc, doped, especially tin-doped, indium oxide and doped, especially antimony-doped tin oxide.

2. Device according to Claim 1, **characterized in that** the grid (9) is based on a pure material chosen from silver, copper, zinc, aluminum, nickel, chromium and a nickel-chromium alloy.

3. Device according to either one of the preceding claims, **characterized in that** the grid (9) has a periodic or aperiodic structure representing a light occultation of 15 to 25%.

4. Device according to any one of the preceding claims, **characterized in that** the thickness of the electrochemical protection layer (10) is between 10 and 100 nm, more preferably between 25 and 75 nm and even more preferably about 50 nm.

5. Device according to any one of the preceding claims, **characterized in that** the thickness of the barrier layer (11) is between 40 and 400 nm, more preferably between 60 and 300 nm and even more preferably about 250 nm.

6. Device according to any one of the preceding claims, **characterized in that** the grid (9) is deposited on a second barrier layer, especially based on silicon nitride.

7. Device according to any one of the preceding claims, **characterized in that** the resistivity of the electroconductive layer (2) is between 0.01 ohms/o and 1 ohms/□, preferably between 0.2 and 0.6 ohms/o and even more preferably about 0.4 ohms/o.

8. Device according to any one of the preceding claims, **characterized in that** the grid retains its electrical conductivity properties before and after heat treatment.

9. Device according to the preceding claim, **characterized in that** this is an electrochromic system, especially an "all solid" electrochromic system or an "all solid" or "all polymer" electrochromic system, a liquid-crystal system or a viologen system or an electroluminescent system.

10. Glazing, **characterized in that** it incorporates the device according to one of the preceding claims.

11. Use of the device according to one of Claims 1 to 9 or of the glazing according to Claim 10 for producing architectural glazing, glazing panels for equipping internal partitions or windows or roofs, or equipping transport means, of the airplane, train, car, boat or worksite vehicle type, display screens, such as computer or television screens or projection screens or touch-sensitive screens, or for producing spectacles or camera lenses or for protecting solar panels, or illuminating surfaces.
